# EUROPÄISCHE PATENTSCHRIFT

(11) **EP 3 743 688 B1**
(45) Veröffentlichungstag und Bekanntmachung des Hinweises auf die Patenterteilung: **01.12.2021**
(21) Anmeldenummer: 19702051.4
(22) Anmeldetag: 24.01.2019
(51) Int. Cl.: G01C 22/02, G06F 21/64, G07C 5/08

(54) **VERFAHREN UND VORRICHTUNG ZUM SPEICHERN VON WEGSTRECKENDATEN**
METHOD AND DEVICE FOR STORING DISTANCE DATA
PROCÉDÉ ET DISPOSITIF POUR LE STOCKAGE DE DONNÉES DE TRAJET

(30) Priorität: 24.01.2018 DE 102018101523
(43) Veröffentlichungstag der Anmeldung: 02.12.2020
(73) Patentinhaber: Bayerische Motoren Werke Aktiengesellschaft, 80809 München (DE); Robert Bosch GmbH, 70442 Stuttgart (DE)
(72) Erfinder: COGIEL, Janus, 80804 München (DE); KAHLE, Holger, 70499 Stuttgart (DE)
(74) Vertreter: Platzöder, Michael Christian
(86) Internationale Anmeldenummer: PCT/EP2019/051739
(87) Internationale Veröffentlichungsnummer: WO 2019/145414

(56) Entgegenhaltungen:
- DE-A1-102013 221 489
- DE-C1- 10 026 738

## Beschreibung

Die vorliegende Erfindung betrifft ein Verfahren und eine Vorrichtung zum Speichern von Wegstreckendaten, die eine zurückgelegte Wegstrecke eines Fahrzeugs, insbesondere Kraftfahrzeugs, kennzeichnen, sowie ein Fahrzeug mit einer solchen Vorrichtung.

Für gewöhnlich sind Fahrzeuge, insbesondere Kraftfahrzeuge, mit einem Wegstreckenzähler (etwa Kilometerstandszähler oder Meilenzähler) ausgestattet, der eingerichtet ist, die vom Fahrzeug seit Inbetriebnahme zurückgelegte Gesamtwegstrecke zu bestimmen. In der Regel weisen solche Wegstreckenzähler eine Zähleinrichtung auf, welche vom Fahrzeug ermittelte Messgrößen erfasst und gegebenenfalls aufsummiert, um die zurückgelegte Wegstrecke, etwa in Kilometern, zu bestimmen. Beispielsweise können die Umdrehungen eines Rads des Fahrzeugs erfasst und aufsummiert werden.

Eine präzise und verlässliche Anzeige der zurückgelegten Gesamtwegstrecke hat in mehrfacher Hinsicht Bedeutung, da insbesondere Wartungen am Fahrzeug in Abhängigkeit der zurückgelegten Gesamtwegstrecke vorgenommen werden sollten und die Bestimmung des ökonomischen Werts des Fahrzeugs, etwa beim Verkauf, in der Regel unter anderem auf Grundlage der zurückgelegten Gesamtwegstrecke bestimmt wird.

Typischerweise wird die aktuelle zurückgelegte Gesamtwegstrecke in einem Steuergerät abgelegt, d.h. gespeichert, und in einem Kombiinstrument des Fahrzeugs angezeigt. Es sind verschiedene Ansätze bekannt, die abgelegte Gesamtwegstrecke vor Manipulationen zu schützen, etwa indem die zurückgelegte Gesamtwegstrecke verschlüsselt im Steuergerät vorgehalten wird.

Die DE 10 2013 221 489 A1 betrifft eine Vorrichtung und ein Verfahren zur Prüfung eines Zählerstandes eines Wegzählers in einem Fahrzeug, wobei das Fahrzeug mindestens eine Speichereinrichtung umfasst, wobei die Speichereinrichtung mindestens einen ersten Speicherbereich für Daten aufweist, wobei die Speichereinrichtung weiter mindestens einen dem ersten Speicherbereich zugeordneten ersten Zählerspeicherbereich zur Speicherung eines Zählerwerts aufweist, wobei Daten aus dem ersten Zählerspeicherbereich nicht auslesbar sind, wobei zum Überschreiben von Daten im ersten Speicherbereich zumindest eine erste Bedingung erfüllt sein muss, wobei die erste Bedingung erfüllt ist, wenn zum Durchführen des Überschreibens ein Zählerwert angegeben wird und dieser angegebene Zählerwert größer als der im ersten Zählerspeicherbereich gespeicherte Zählerwert ist, wobei als Zählerwert jeweils der aktuelle Zählerstand des Wegzählers angegeben wird, wobei der Zählerstand des Wegzählers des Fahrzeugs als fehlerhaft klassifiziert wird, falls das Überschreiben nicht erfolgreich ist.

Die DE 100 26 738 C1 betrifft ein Verfahren, bei dem in einem Kombiinstrument eines Fahrzeugs gespeicherte Wegstreckendaten einem außerhalb des Kombiinstruments befindlichen weiteren Speicher zugeführt werden. Die in dem weiteren Speicher gespeicherten Wegstreckendaten werden nach Zurücklegen einer Wegstrecke mit den aktuellen Wegstreckendaten verglichen. Wenn die aktuellen Wegstreckendaten eine Wegstrecke kleiner als die den vorher gespeicherten Wegstreckendaten entsprechende Wegstrecke anzeigen, wird ein Fehlersignal erzeugt.

Es ist eine Aufgabe der Erfindung, einen weiter verbesserten Schutz eines Wegstreckenzählers für ein Fahrzeug anzugeben.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein Aspekt der Erfindung betrifft ein Verfahren zum Speichern von Wegstreckendaten, die eine zurückgelegte Gesamtwegstrecke eines Fahrzeugs, insbesondere Kraftfahrzeugs, kennzeichnen, in einer Speichereinrichtung, wobei das Verfahren aufweist: (i) Speichern von Wegstreckendaten, welche eine auf Grundlage von vom Fahrzeug ermittelten Fahrzeugdaten ermittelte zurückgelegte Gesamtwegstrecke des Fahrzeugs kennzeichnen, in einem nichtflüchtigen ersten Speicherbereich der Speichereinrichtung, wenn dadurch eine Erhöhung der in ihm mittels entsprechender Wegstreckendaten bereits zuvor gespeicherten Gesamtwegstrecke verbunden ist, wobei der erste Speicherbereich eingerichtet ist, keine Änderung, insbesondere kein Überschreiben, der in ihm bereits gespeicherten Wegstreckendaten zuzulassen, soweit diese Änderung zu einer Verringerung der entsprechenden Gesamtwegstrecke korrespondiert; (ii) Vergleichen einer ersten Referenzgesamtwegstrecke, die mittels entsprechender erster Referenzwegstreckendaten in einem vom ersten Speicherbereich verschiedenen zweiten Speicherbereich der Speichereinrichtung gespeichert ist, mit der gegenwärtig im ersten Speicherbereich mittels der Wegstreckendaten gespeicherten Gesamtwegstrecke im Rahmen eines ersten Vergleichs; und (iii) falls gemäß dem Ergebnis des ersten Vergleichs sich die Gesamtwegstrecke gegenüber der ersten Referenzgesamtwegstrecke gemäß einem vorbestimmten ersten Kriterium erhöht hat, verschlüsseltes Speichern von aktualisierten ersten Referenzwegstreckendaten, die der Gesamtwegstrecke entsprechen, im zweiten Speicherbereich.

Die Fahrzeugdaten können insbesondere in einer Nachricht enthalten sein, die über einen Fahrzeugbus, z.B. einen CAN-Bus, von wenigstens einer Fahrzeugkomponente, etwa einem Steuergerät, gesendet wird. Die Fahrzeugdaten können die aktuelle zurückgelegte Gesamtwegstrecke als numerischen Wert in digitaler Form, etwa in Form von Sensordaten, oder in Form von anderen Signalen enthalten, anhand der die aktuelle zurückgelegte Gesamtwegstrecke ermittelt, insbesondere abgeleitet oder ausgelesen, werden kann.

Unter einem Speichern von Wegstreckendaten und/oder Referenzwegstreckendaten ist im Sinne der Erfindung insbesondere ein Schreiben derselben in einen Speicherbereich, vorzugsweise eines nicht-flüchtigen Datenspeichers, zu verstehen. Die Wegstrecken- und/oder Referenzwegstreckendaten können dabei vorzugsweise auf einem bereits mit zu einem früheren Zeitpunkt gespeicherten Wegstrecken- bzw. Referenzwegstreckendaten belegten Speicherplatz des Speicherbereichs abgelegt werden, wobei diese bereits zuvor gespeicherten Daten ersetzt, insbesondere überschrieben, werden. Alternativ können die Wegstrecken- und/oder Referenzwegstreckendaten auf einem noch nicht belegten Speicherplatz des Speicherbereichs abgelegt, d.h. zusätzlich zu diesen bereits zuvor gespeicherten Daten in den Speicherbereich geschrieben werden. Auch Mischformen dieser beiden Alternativen sind denkbar.

Der erste Speicherbereich dient vorzugsweise als primäre Ablage der zurückgelegten Gesamtwegstrecke und ist vorzugsweise in einem Kombiinstrument des Fahrzeugs vorgesehen bzw. wird von diesem gebildet. Ein Anzeigen der zurückgelegten Gesamtwegstrecke durch das Kombiinstrument basiert somit vorzugsweise auf den im ersten Speicherbereich gespeicherten Wegstreckendaten.

Die Speichereinrichtung kann dabei einen oder mehrere, insbesondere separate, insbesondere nicht-flüchtige, Datenspeicher aufweisen. Der eine oder jeder der mehreren Datenspeicher kann dabei einen oder mehrere Speicherbereiche aufweisen. Beispielsweise kann ein Datenspeicher als EEPROM mit dem ersten und zweiten Speicherbereich ausgebildet sein.

Die im ersten Speicherbereich mittels der Wegstreckendaten gespeicherte zurückgelegte Gesamtwegstreckeninformation ist vor einer Manipulation, insbesondere vor einem Zurücksetzen, gesichert, da bei beim Speichern der Gesamtwegstrecke, etwa durch eine Änderung, insbesondere Aktualisierung, von bereits im ersten Speicherbereich gespeicherten Wegstreckendaten die dadurch repräsentierte Gesamtwegstrecke nur, insbesondere inkrementell, erhöht werden kann. Vorzugsweise ist der erste Speicherbereich zu diesem Zweck, etwa in einem EEPROM, physikalisch in der Weise konfiguriert, dass nur solche Änderungen der im ersten Speicherbereich gespeicherten Wegstreckendaten möglich sind, die einer Erhöhung der durch sie repräsentierten Gesamtwegstrecke entsprechen. Dadurch kann eine Manipulation der Wegstreckendaten in der Weise, dass die manipulierten Wegstreckendaten einer verkürzten Gesamtwegstrecke entsprechen, verhindert oder zumindest deutlich erschwert werden.

Der erste Vergleich der aktuell zurückgelegten Gesamtwegstrecke mit der ersten Referenzgesamtwegstrecke kann vorzugsweise von einer dazu eingerichteten Recheneinrichtung, insbesondere des Kombiinstruments, ausgeführt werden. Die Recheneinrichtung ist dazu vorzugsweise an den Fahrzeugbus, den ersten Speicherbereich und/oder den zweiten Speicherbereich gekoppelt.

Dadurch, dass die Wegstreckendaten im ersten Speicherbereich immer, insbesondere zyklisch in einem vorgegebenen Verfahrenstakt, gespeichert werden, die ersten Referenzwegstreckendaten im zweiten Speicherbereich jedoch nur gespeichert werden, wenn ein bestimmtes Ergebnis des ersten Vergleichs vorliegt, ergeben sich für die Speichervorgänge im ersten und zweiten Speicherbereich in der Regel unterschiedliche Speichertakte, wobei die ersten Referenzwegstreckendaten im zweiten Speicherbereich seltener gespeichert werden als die Wegstreckendaten im ersten Speicherbereich. Dadurch können die Speicherbereiche unterschiedlich ausgelegt sein. Insbesondere kann der erste Speicherbereich für besonders kurze Zugriffszeiten optimiert sein, während der zweite Speicherbereich zur Speicherung besonders großer Datenmengen ausgelegt sein kann.

Die im zweiten Speicherbereich mittels der ersten Referenzwegstreckendaten gespeicherte erste Referenzgesamtwegstrecke ist vor einer Manipulation, insbesondere vor einem Zurücksetzen, geschützt, da die ersten Referenzwegstreckendaten bei der Speicherung kryptographisch verschlüsselt werden. Vorzugsweise werden die ersten Referenzwegstreckendaten dabei mit einem symmetrischen Verschlüsselungsverfahren, insbesondere mit AES-128, bevorzugt mit AES-192, besonders bevorzugt mit AES-256 oder mit einem vergleichbaren Standard, verschlüsselt. Der dabei verwendete kryptographische Schlüssel kann im zweiten Speicherbereich abgelegt sein, auf den die Steuereinrichtung zur Ver- bzw. Entschlüsselung der Referenzwegstreckendaten zugreifen kann. Alternativ kann der kryptographische Schlüssel aber auch außerhalb des zweiten Speicherbereichs, etwa in einem separaten Speicherbereich auf einem separaten Hardwaremodul, abgelegt sein.

Die redundante Speicherung der zurückgelegten Gesamtwegstrecke im ersten und zweiten Speicherbereich mittels der entsprechenden Wegstreckendaten bzw. Referenzwegstreckendaten ermöglicht daher einen besonders zuverlässigen Manipulationsschutz der in ihnen abgelegten zurückgelegten Gesamtwegstrecke. Die sog. inkrementelle Speicherung im ersten Speicherbereich, der, vorzugsweise bauartbedingt, ausschließlich eine Erhöhung der durch die in ihm gespeicherten Wegstreckendaten repräsentierten Gesamtwegstrecke zulässt, sichert die Gesamtwegstrecke auf eine zur verschlüsselten Speicherung der ersten Referenzgesamtwegstrecke im zweiten Speicherbereich komplementären Weise. Der Aufwand für eine Manipulation wird dadurch in besonderem Maße erhöht.

Insgesamt ermöglicht die Erfindung daher einen verbesserten Schutz einer im Fahrzeug abgelegten zurückgelegten Gesamtwegstrecke.

In einer bevorzugten Ausführungsform ist der zweite Speicherbereich größer als der erste Speicherbereich, d.h. der zweite Speicherbereich weist mehr Speicherplatz auf als der erste Speicherbereich. Insbesondere ist der erste Speicherbereich eingerichtet, nur eine erste Menge an Wegstreckendaten zu speichern, durch die eine einzige Gesamtwegstrecke gekennzeichnet werden kann. Alternativ oder zusätzlich ist der zweite Speicherbereich eingerichtet, eine zweite Menge an ersten Referenzwegstreckendaten zu speichern, durch die mehrere erste Referenzgesamtwegstrecken gekennzeichnet werden können. Dadurch kann die zurückgelegte Gesamtwegstrecke in Form der Wegstreckendaten im ersten Speicherbereich hochfrequent, d.h. mit einem schnellen Verfahrenstakt in kleinen Inkrementen, gespeichert werden, während im zweiten Speicherbereich eine Historie der zurückgelegten Gesamtwegstrecke speicherbar ist. Solche kleinen Inkremente sind insbesondere kurze räumliche Strecken, etwa 5 km oder darunter, vorzugsweise 2 km oder darunter, insbesondere 1 km oder darunter. Dabei kann die niederfrequente Speicherung der ersten Referenzwegstreckendaten ein Überlaufen des zweiten Speicherbereichs verhindern.

In einer weiteren bevorzugten Ausführungsform werden, falls sich die Gesamtwegstrecke gegenüber der ersten Referenzgesamtwegstrecke gemäß dem Ergebnis des ersten Vergleichs und gemäß einem vorbestimmten Kriterium verringert hat, die im ersten Speicherbereich gespeicherten Wegstreckendaten so aktualisiert, dass sie nun zur ersten Referenzgesamtwegstrecke korrespondieren. Dadurch kann bzw. können eine Fehlfunktion des ersten Speicherbereichs und/oder fehlerhafte Fahrzeugdaten zuverlässig kompensiert werden. Insbesondere ist durch den ersten Vergleich eine Manipulation der im ersten Speicherbereich gespeicherten Wegstreckendaten bzw. der durch sie repräsentierten zurückgelegten Gesamtwegstrecke erkennbar, wobei die Manipulation durch die vorstehend beschriebene Aktualisierung der Wegstreckendaten vereitelt bzw. rückgängig gemacht werden kann.

In einer weiteren bevorzugten Ausführungsform wird zusätzlich zur Aktualisierung der Wegstreckendaten im ersten Speicherbereich eine Indikatorinformation über das Auftreten des Vergleichsergebnisses, insbesondere eine Manipulationswarnung, gespeichert oder an einer Schnittstelle ausgegeben, falls sich die Gesamtwegstrecke gegenüber der ersten Referenzgesamtwegstrecke gemäß dem Ergebnis des ersten Vergleichs gemäß dem vorbestimmten Kriterium verringert hat. Durch die Speicherung der Indikatorinformation ist es, etwa für weitere Fahrzeugkomponenten oder in einer Werkstatt, leicht und schnell erkennbar, dass eine Manipulation stattgefunden haben könnte. Die Indikatorinformation kann über die Schnittstelle beispielsweise an eine entsprechende Behörde, einer Werkstatt und/oder den Fahrzeughersteller übermittelt oder zugreifbar gemacht werden, wodurch zuverlässig geeignete Maßnahmen in Bezug auf Strafverfolgung und/oder Vereitelung des Manipulationsversuchen ergriffen werden können.

In einer weiteren bevorzugten Ausführungsform werden die im ersten Speicherbereich gespeicherten Wegstreckendaten im zweiten Speicherbereich als erste Referenzwegstreckendaten gespeichert, falls beim ersten Vergleich festgestellt wird, dass der zweite Speicherbereich keine ersten Referenzwegstreckendaten enthält. Dadurch kann das erfindungsgemäße Verfahren auch im Falle einer erstmaligen Initialisierung oder eines sog. Resets, d.h. eines Zurücksetzens, des zweiten Speicherbereiches, etwa bei einem Austausch eines dem zweiten Speicherbereich zugeordneten nicht-flüchtigen Datenspeichers, zuverlässig und fehlerfrei ausgeführt werden.

Im Rahmen des ersten Vergleichs werden vorzugsweise Identifikationsdaten der Speicherbereiche, insbesondere der ihnen zugeordneten Datenspeicher, mit beispielsweise in der Recheneinrichtung abgelegten Identifikationsdaten verglichen, so dass, etwa bei mangelnder Übereinstimmung der entsprechenden Identifikationsdaten, auf eine Änderung wenigstens eines der Speicherbereiche, insbesondere bei einem Austausch oder einer Reparatur des entsprechenden Datenspeichers, geschlossen werden kann. Die Daten in den geänderten Speicherbereichen können daraufhin auf Grundlage der in einem nicht geänderten Speicherbereich gespeicherten Wegstreckendaten bzw. ersten Referenzwegstreckendaten wiederhergestellt werden. Somit kann ein hardwarebasierter Manipulationsversuch der zurückgelegten Gesamtwegstrecke verhindert oder zumindest erschwert werden.

In einer weiteren bevorzugten Ausführungsform weist das Verfahren des Weiteren auf: (i) Vergleichen der mittels der Wegstreckendaten im ersten Speicherbereich gespeicherte Gesamtwegstrecke mit einer zweiten Referenzgesamtwegstrecke, die mittels zweiter Referenzwegstreckendaten in einem weiteren Speicherbereich gespeichert ist, im Rahmen eines zweiten Vergleichs; und (ii) falls gemäß dem Ergebnis des zweiten Vergleichs sich die Gesamtwegstrecke gegenüber der zweiten Referenzgesamtwegstrecke gemäß einem vorbestimmten zweiten Kriterium erhöht hat, verschlüsseltes Speichern von aktualisierten zweiten Referenzwegstreckendaten, die der Gesamtwegstrecke entsprechen, im weiteren Speicherbereich. Dadurch wird eine weitere Absicherung der zurückgelegten Gesamtwegstrecke, insbesondere eine weitere redundante Speicherung der Gesamtwegstrecke in Form von zweiten Referenzwegstreckendaten, ermöglicht und somit die Sicherheit in Bezug auf Manipulationsversuche erhöht.

In einer weiteren bevorzugten Ausführungsform ist das erste Kriterium und/oder das zweite Kriterium so definiert, dass es erfüllt wird, wenn die Gesamtwegstrecke, wie sie durch die im ersten Speicherbereich gespeicherten Wegstreckendaten gekennzeichnet ist, um mehr als 10 km, vorzugsweise um mehr als 100 km, insbesondere um mehr als 1000 km größer ist als die erste Referenzwegstrecke bzw. die zweite Referenzwegstrecke. Die durch im ersten Speicherbereich gespeicherte Wegstreckendaten gekennzeichnete Gesamtwegstrecke wird dabei vorzugsweise in kleinen Inkrementen erhöht, insbesondere indem die Wegstreckendaten im ersten Speicherbereich entsprechend überschrieben oder geändert werden. Die durch im zweiten bzw. weiteren Speicherbereich gespeicherten Referenzwegstreckendaten gekennzeichnete Gesamtwegstrecke wird dabei vorzugsweise in größeren Inkrementen erhöht, insbesondere indem die Referenzwegstreckendaten zusätzlich zu bereits vorhandenen Referenzwegstreckendaten in den zweiten bzw. weiteren Speicherbereich geschrieben werden. Durch die vorstehende Definition des ersten und/oder zweiten Kriteriums kann somit ein Überlaufen des zweiten und/oder weiteren Speicherbereichs zuverlässig vermieden werden, auch wenn im ersten Speicherbereich eine im Wesentlichen kontinuierliche oder zumindest hochfrequente Speicherung von Wegstreckendaten stattfindet.

In einer weiteren bevorzugten Ausführungsform wird beim Vergleichen im Rahmen des ersten Vergleichs und/oder des zweiten Vergleichs ein aus den Fahrzeugdaten abgeleiteter gegenwärtiger Kraftstoffgesamtverbrauch des Fahrzeugs berücksichtigt. Die Absicherung der zurückgelegten Gesamtwegstrecke, insbesondere gegen eine Manipulation, wird dadurch weiter verbessert, da für eine erfolgreiche Manipulation nun auch eine Anpassung des Kraftstoffgesamtverbrauchs, die bezüglich der zurückgelegten Gesamtwegstrecke plausibel ist, ausgeführt werden müsste. Insbesondere kann eine im Rahmen des ersten Vergleichs ermittelte Erhöhung der zurückgelegten Gesamtwegstrecke anhand der Prüfung des Kraftstoffgesamtverbrauchs, insbesondere ob und gegebenenfalls wie stark sich der gegenwärtige Kraftstoffgesamtverbrauch gegenüber einem Kraftstoffgesamtverbrauch zu einem früheren Zeitpunkt erhöht hat, auf Plausibilität geprüft werden.

Ein Kraftstoffgesamtverbrauch des Fahrzeugs im Sinne der Erfindung ist insbesondere die seit Inbetriebnahme verbrauchte Menge an Kraftstoff, wie sie sich etwa annährend durch Multiplikation des durchschnittlichen Kraftstoffverbrauchs des Fahrzeugs mit der zurückgelegten Gesamtwegstrecke ergibt. Unter einem Kraftstoffgesamtverbrauch kann neben dem Gesamtverbrauch traditioneller Flüssigkraftstoffe wie etwa Benzin, Diesel oder dergleichen auch der Gesamtverbrauch von elektrischer Energie, etwa in elektromotorisch betriebenen Fahrzeugen, verstanden werden. Dadurch kann eine im Rahmen des ersten Vergleichs ermittelte Erhöhung der zurückgelegten Gesamtstrecke auch für elektromotorisch betriebene Fahrzeuge auf Plausibilität geprüft werden.

In einer weiteren bevorzugten Ausführungsform werden die ersten Referenzwegstreckendaten im zweiten Speicherbereich und/oder gegebenenfalls die zweiten Referenzwegstreckendaten im weiteren Speicherbereich gespeichert, wenn der gegenwärtige Kraftstoffgesamtverbrauch des Fahrzeugs um mehr als 100 Liter, vorzugsweise mehr als 10 Liter, insbesondere mehr als 1 Liter, gegenüber einem Kraftstoffgesamtverbrauch des Fahrzeugs zu einem früheren Zeitpunkt, insbesondere zu dem die letzte Speicherung von ersten und/oder zweiten Referenzwegstreckendaten erfolgt ist, gestiegen ist. Dadurch kann der Speichertakt, mit dem die zweiten und/oder weiteren Referenzwegstreckendaten im zweiten bzw. weiteren Speicherbereich gespeichert werden, auch bei einer Manipulation der Fahrzeugdaten, auf Grundlage deren die Gesamtwegstrecke ermittelt wird, aufrechterhalten werden und die Manipulation durch eine Plausibilitätsprüfung von Kraftstoffgesamtverbrauch und zurückgelegter Gesamtwegstrecke festgestellt werden.

In einer weiteren bevorzugten Ausführung werden die ersten Referenzwegstreckendaten im zweiten Speicherbereich und/oder gegebenenfalls die zweiten Referenzwegstreckendaten im weiteren Speicherbereich durch Zugriff auf zumindest einen kryptographischen Schlüssel, der in einem Schlüsselspeicher abgelegt ist, ver- und/ oder entschlüsselt. Der Schlüsselspeicher ist vorzugsweise separat vom ersten, zweiten und/oder weiteren Speicherbereich ausgebildet. Der Schlüsselspeicher kann insbesondere als Hardware-Sicherheitsmodul ausgebildet sein. Dadurch kann eine Manipulation der ersten und/oder zweiten Referenzgesamtwegstrecke bzw. der ersten und/der zweiten Referenzwegstreckendaten zuverlässig verhindert oder zumindest erschwert werden.

In einer weiteren bevorzugten Ausführungsform wird im zweiten Speicherbereich und/oder im weiteren Speicherbereich eine Historie der zurückgelegten Gesamtwegstrecke erzeugt, indem erste Referenzwegstreckendaten bzw. zweite Referenzwegstreckendaten neben bereits im zweiten bzw. weiteren Speicherbereich gespeicherten Referenzwegstreckendaten gespeichert werden. Vorzugsweise wird im Rahmen des ersten und/oder zweiten Vergleichs die im zweiten und/oder weiteren Speicherbereich erzeugte Historie auf Plausibilität geprüft, insbesondere, ob die durch die ersten bzw. zweiten Referenzwegstreckendaten gekennzeichneten Gesamtwegstrecken zunehmend größer werden. Dadurch wird der Schutz der im Fahrzeug abgelegten Gesamtwegstrecke weiter verbessert, da für eine Manipulation der Gesamtwegstrecke somit nicht nur die aktuelle Referenzgesamtwegstrecke, sondern die gesamte Historie der Gesamtwegstrecke angepasst werden müsste.

In einer weiteren bevorzugten Ausführungsform werden die Wegstreckendaten in der Weise im ersten Speicherbereich gespeichert, dass sich die durch sie gekennzeichnete gegenwärtig zurückgelegte Gesamtwegstrecke gegenüber der zum früheren Zeitpunkt zurückgelegten Gesamtwegstrecke um einen vorgegebenen Wert inkrementell erhöht. Vorzugsweise werden die Wegstreckendaten in regelmäßigen, insbesondere räumlichen, Intervallen gespeichert, deren Breite durch den vorgegebenen Wert definiert ist. Insbesondere ergibt sich der vorgegebene Wert aus dem Verfahrenstakt, mit dem das Verfahren durchgeführt wird.

Der vorgegebene Wert kann etwa 100 m, vorzugsweise 500 m, insbesondere 1 km betragen, so dass die in Form von Wegstreckendaten im ersten Speicherbereich gespeicherte Gesamtwegstrecke bei einer durchschnittlichen Reisegeschwindigkeit des Fahrzeugs, etwa bei 50 km/h, in kurzen zeitlichen Abständen, etwa wenigstens alle 5 Minuten, vorzugsweise wenigstens alle 2 Minuten, insbesondere wenigstens jede Minute aktualisiert wird. Dadurch können die Wegstreckendaten aus dem ersten Speicherbereich zum zuverlässigen und präzisen Anzeigen der zurückgelegten Gesamtwegstrecke, etwa in einem Kombiinstrument des Fahrzeugs, verwendet werden.

Ein zweiter Aspekt der Erfindung betrifft eine Vorrichtung zum Speichern von Wegstreckendaten, die konfiguriert ist, das Verfahren nach dem ersten Aspekt der Erfindung auszuführen. Dadurch, dass eine Speicherung der Gesamtwegstrecke in zwei verschiedenen Speicherbereichen ausführbar ist, von denen einer zur gesicherten Speicherung, bei der ausschließlich eine Erhöhung der mittels Wegstreckendaten in ihm gespeicherten Gesamtwegstrecke erfolgen kann, und der andere zur verschlüsselten Speicherung eingerichtet ist, ist ein besonders zuverlässiger Schutz der Gesamtwegstrecke möglich.

In einer bevorzugten Ausführungsform weist die Vorrichtung eine Speichereinrichtung mit zumindest zwei nicht-flüchtige Datenspeichern auf, die räumlich voneinander getrennt sind, wobei jeder der nicht-flüchtigen Datenspeicher mindestens einen der Speicherbereiche bereitstellt. Dadurch können der erste und zweite Speicherbereich effektiv auf die sog. inkrementelle Speicherung der Wegstreckendaten bzw. auf die verschlüsselte Speicherung der ersten Referenzwegstreckendaten ausgelegt sein. Der Schutz der abgelegten Gesamtwegstrecke kann somit weiter erhöht werden.

In einer weiteren bevorzugten Ausführungsform ist zumindest einer der nichtflüchtigen Datenspeicher als eines der folgenden ausgebildet: (i) EEPROM, (ii) Flash-Speicher, oder (iii) fahrzeugexterne Referenzdatenbank. Auf einem EEPROM können die Wegstreckendaten etwa hochfrequent inkrementell gespeichert werden. Auf einem Flash-Speicher können die Referenzwegstreckendaten etwa in großen Mengen und mit starker Verschlüsselung gespeichert werden. Durch das Speichern der Referenzwegstreckendaten in einer fahrzeugexternen Referenzdatenbank kann ein unerlaubter Zugriff auf die Referenzwegstreckendaten verhindert oder zumindest deutlich erschwert werden.

Ein dritter Aspekt der Erfindung betrifft ein Fahrzeug, insbesondere Kraftfahrzeug, mit einer Vorrichtung nach dem zweiten Aspekt der Erfindung.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten und dritten Aspekt der Erfindung und dessen vorteilhafte Ausgestaltung sowie umgekehrt.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:
- Fig. 1: ein Ausführungsbeispiel des erfindungsgemäßen Verfahrens; und
- Fig. 2: ein Ausführungsbeispiel einer erfindungsgemäßen Vorrichtung.

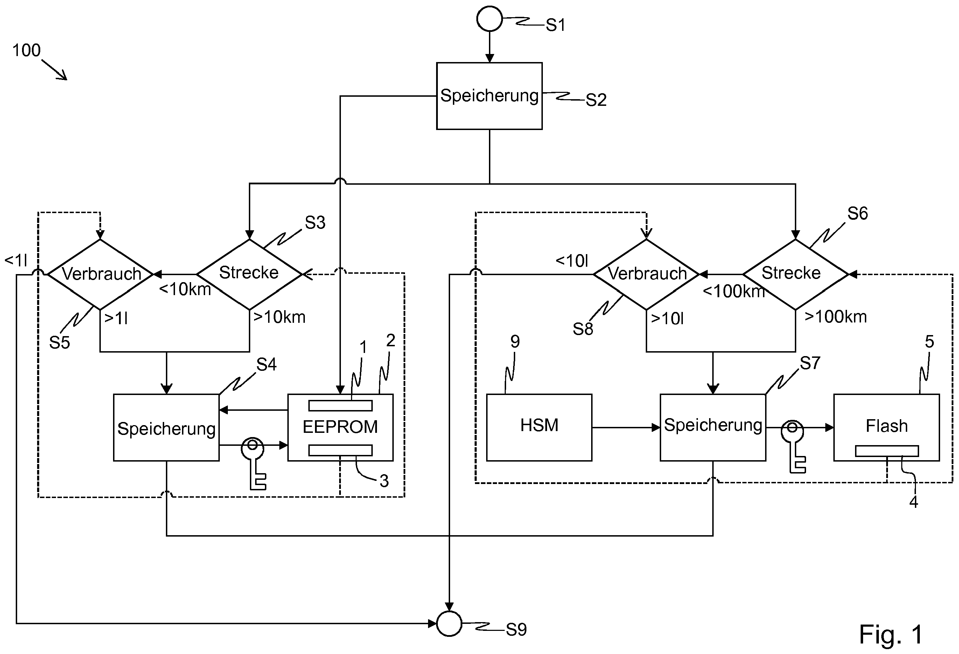

**Fig. 1** zeigt ein Ausführungsbeispiel des erfindungsgemäßen Verfahrens 100 zum Speichern von Wegstreckendaten, die eine zurückgelegte Gesamtwegstrecke eines Fahrzeugs, insbesondere Kraftfahrzeugs, kennzeichnen.

In einem Verfahrensschritt S1 wird eine zurückgelegte Gesamtwegstrecke, die das Fahrzeug zum gegenwärtigen Zeitpunkt zurückgelegt hat, anhand von bereitgestellten Fahrzeugdaten ermittelt. Diese Fahrzeugdaten sind vorzugsweise in einer Busnachricht enthalten, die über einen Fahrzeugbus des Fahrzeugs, etwa einen CAN-Bus, versendet und von einer Vorrichtung, die insbesondere zum Ausführen des Verfahrens 100 eingerichtet ist, empfangen wird. Diese Vorrichtung kann etwa eine Steuereinrichtung aufweisen, welche zur Ermittlung der gegenwärtig zurückgelegten Gesamtwegstrecke eingerichtet ist, insbesondere indem die Gesamtwegstrecke aus den Fahrzeugdaten, in bevorzugter Weise aus darin enthaltenen Sensordaten, abgeleitet oder die Gesamtwegstrecke aus den Fahrzeugdaten, etwa als numerischer Wert, ausgelesen wird.

In einem weiteren Verfahrensschritt S2 werden Wegstreckendaten, welche die ermittelte gegenwärtig zurückgelegte Gesamtwegstrecke kennzeichnen, in einem ersten Speicherbereich 1 eines ersten nicht-flüchtigen Datenspeichers 2, etwa eines EEPROMs, gespeichert. Dabei enthält der erste Speicherbereich 1 in der Regel bereits Wegstreckendaten, die zu einem ersten früheren Zeitpunkt im ersten Speicherbereich 1 gespeichert wurden und eine zum ersten früheren Zeitpunkt zurückgelegte Gesamtwegstrecke des Fahrzeugs kennzeichnen. Diese bereits im ersten Speicherbereich 1 abgelegten Wegstreckendaten werden in Verfahrensschritt S2, d.h. beim Speichern der aktuellen Wegstreckendaten, vorzugsweise derart geändert oder aktualisiert, dass die im Speicherbereich 1 gespeicherten Wegstreckendaten nach dieser Änderung die gegenwärtig zurückgelegte Gesamtwegstrecke kennzeichnen. Alternativ werden die bereits im ersten Speicherbereich 1 abgelegten Wegstreckendaten in Verfahrensschritt S2 durch die aktuellen Wegstreckendaten, welche die gegenwärtig zurückgelegte Gesamtwegstrecke kennzeichnen, ersetzt. In jedem Fall findet durch den Speichervorgang eine Erhöhung der zurückgelegten Gesamtwegstrecke, wie sie durch die im ersten Speicherbereich 1 abgelegten Wegstreckendaten gekennzeichnet ist, statt.

Der nicht-flüchtige erste Datenspeicher 2, insbesondere der erste Speicherbereich 1, ist dabei vorzugsweise derart eingerichtet, dass, insbesondere im ersten Speicherbereich 1, nur eine solche Gesamtwegstrecke mittels Wegstreckendaten speicherbar ist, die größer ist als eine zum ersten früheren Zeitpunkt zurückgelegte Gesamtwegstrecke. Insbesondere kann der nicht-flüchtige erste Datenspeicher 2, insbesondere der erste Speicherbereich 1, eingerichtet sein, keine Änderungen der in ihm bereits gespeicherten Wegstreckendaten zuzulassen, soweit diese Änderungen zu einer Verringerung der entsprechenden Gesamtwegstrecke korrespondieren. Ein derart eingerichteter nicht-flüchtiger erster Datenspeicher 2, insbesondere erster Speicherbereich 1, wird auch als inkrementeller Speicher bezeichnet, in dem die Gesamtwegstrecke mittels Wegstreckendaten gesichert speicherbar ist.

In einem weiteren Verfahrensschritt S3 wird eine erste Referenzgesamtwegstrecke, die durch in einem zweiten Speicherbereich 3 zu einem zweiten früheren Zeitpunkt gespeicherte erste Referenzwegstreckendaten gekennzeichnet ist, mit der gegenwärtig zurückgelegten Gesamtwegstrecke, wie sie durch die im ersten Speicherbereich 1 gespeicherten Wegstreckendaten gekennzeichnet ist, im Rahmen eines ersten Vergleichs verglichen. In der Regel liegt der zweite frühere Zeitpunkt dabei weiter in der Vergangenheit als der erste frühere Zeitpunkt.

Falls gemäß dem Ergebnis des ersten Vergleichs ein vorbestimmtes erstes Kriterium erfüllt ist, beispielsweise dass die gegenwärtig zurückgelegte Gesamtwegstrecke mindestens um einen vorgegebenen Wert, insbesondere um mindestens 10 km, größer ist als die erste Referenzgesamtwegstrecke, werden die im ersten Speicherbereich 1 gespeicherten Wegstreckendaten als aktuelle erste Referenzwegstreckendaten in Verfahrensschritt S4 im zweiten Speicherbereich 3 gespeichert. Insbesondere können die im ersten Speicherbereich 1 abgelegten Wegstreckendaten, welche die gegenwärtig zurückgelegte Gesamtwegstrecke kennzeichnen, aus dem ersten Speicherbereich 1 in den zweiten Speicherbereich 3 kopiert werden, wo sie die aktualisierten ersten Referenzwegstreckendaten bilden.

Die dabei gespeicherten ersten Referenzwegstreckendaten kennzeichnen daher eine aktualisierte erste Referenzgesamtwegstrecke, die in zukünftigen Vergleichen mit einer zukünftig ermittelten Gesamtwegstrecke verglichen werden kann.

Vorzugsweise werden die ersten Referenzwegstreckendaten in Verfahrensschritt S4 zusätzlich zu den bereits im zweiten Speicherbereich 3 gespeicherten ersten Referenzwegstreckendaten, welche die bisherige erste Referenzwegstrecke gekennzeichnet haben, gespeichert, so dass der zweite Speicherbereich 3 eine Historie der zurückgelegten Gesamtwegstrecke enthält.

Die ersten Referenzwegstreckendaten werden in Verfahrensschritt S4 vorzugsweise in verschlüsselter Form im zweiten Speicherbereich 3 gespeichert. Dazu wird, beispielsweise von der Steuereinrichtung, auf einen kryptographischen Schlüssel zugegriffen, mittels dessen die Verschlüsselung in bevorzugter Weise mit einem symmetrischen Verschlüsselungsverfahren, etwa mit dem AES-128, bevorzugt mit dem AES-196, insbesondere mit dem AES-256, durchführbar ist. Der kryptographische Schlüssel kann dabei, wie im vorliegenden Ausführungsbeispiel gezeigt, im zweiten Speicherbereich 3 oder in einem anderen Speicherbereich des nicht-flüchtigen ersten Datenspeichers 2 abgelegt sein. Alternativ kann der kryptographische Schlüssel aber auch in einem anderen Speicherbereich eines anderen nicht-flüchtigen Datenspeichers abgelegt sein (nicht dargestellt).

Falls sich die Gesamtwegstrecke gemäß dem Ergebnis des ersten Vergleichs in Verfahrensschritt S3 dagegen nicht gemäß dem ersten Kriterium gegenüber der ersten Referenzgesamtwegstrecke erhöht hat, wird in einem weiteren Verfahrensschritt S5 geprüft, ob ein gegenwärtiger Kraftstoffgesamtverbrauch des Fahrzeugs, der vorzugsweise ebenfalls anhand der Fahrzeugdaten ermittelt wird, mindestens um einen vorgegebenen Wert größer ist als ein Kraftstoffgesamtverbrauch zum zweiten früheren Zeitpunkt.

Der Kraftstoffgesamtverbrauch des Fahrzeugs zum zweiten früheren Zeitpunkt ist vorzugsweise im zweiten Speicherbereich 3 des nicht-flüchtigen ersten Datenspeichers 2 in Form von Verbrauchsdaten zusätzlich zu den ersten Referenzwegstreckendaten gespeichert, und kann für die Prüfung in Verfahrensschritt S5 ausgelesen werden.

Ergibt die Prüfung, dass der gegenwärtige Kraftstoffgesamtverbrauch mindestens um den vorgegebenen Wert, etwa um einen Liter, größer ist, wird das Verfahren 100 in Verfahrensschritt S4 fortgeführt. Dabei wird neben den ersten Referenzwegstreckendaten in Verfahrensschritt S4 vorzugsweise auch der gegenwärtige Kraftstoffgesamtverbrauch des Fahrzeugs in Form von Verbrauchsdaten im zweiten Speicherbereich 3 gespeichert, um für zukünftige Prüfungen zur Verfügung zu stehen.

Ergibt die in Verfahrensschritt S5 durchgeführte Prüfung jedoch, dass der gegenwärtige Kraftstoffgesamtverbrauch nicht mindestens um den vorgegebenen Wert größer ist als der Kraftstoffgesamtverbrauch zum zweiten früheren Zeitpunkt, wird das Verfahren 100 mit einem weiteren Verfahrensschritt S9 fortgeführt.

Vorzugsweise gleichzeitig zum, insbesondere unabhängig vom, Verfahrensschritt S3 wird in einem weiteren Verfahrensschritt S6 eine zweite Referenzgesamtwegstrecke, die durch in einem weiteren Speicherbereich 4 zu einem dritten früheren Zeitpunkt gespeicherte zweite Referenzwegstreckendaten gekennzeichnet ist, mit der gegenwärtig zurückgelegten Gesamtwegstrecke, wie sie durch die im ersten Speicherbereich 1 gespeicherten Wegstreckendaten gekennzeichnet ist, im Rahmen eines zweiten Vergleichs verglichen. In der Regel liegt der dritte frühere Zeitpunkt dabei weiter in der Vergangenheit als der zweite und/oder erste frühere Zeitpunkt.

Falls gemäß dem Ergebnis des zweiten Vergleichs ein vorbestimmtes zweites Kriterium erfüllt ist, beispielsweise dass die gegenwärtig zurückgelegte Gesamtwegstrecke mindestens um einen zweiten vorgegebenen Wert, insbesondere um mindestens 100 km, größer ist als die zweite Referenzgesamtwegstrecke, werden die im ersten Speicherbereich 1 gespeicherten Wegstreckendaten als aktuelle zweite Referenzwegstreckendaten in Verfahrensschritt S7 im weiteren Speicherbereich 4 gespeichert. Insbesondere können die im ersten Speicherbereich 1 abgelegten Wegstreckendaten, welche die gegenwärtig zurückgelegte Gesamtwegstrecke kennzeichnen, aus dem ersten Speicherbereich 1 in den weiteren Speicherbereich 4 kopiert werden, wo sie die aktualisierten zweiten Referenzwegstreckendaten bilden.

Die dabei gespeicherten zweiten Referenzwegstreckendaten kennzeichnen daher eine aktualisierte zweite Referenzgesamtwegstrecke, die in zukünftigen Vergleichen mit einer zukünftig ermittelten Gesamtwegstrecke verglichen werden kann.

Dabei ist der nicht-flüchtige zweite Datenspeicher 5 vorzugsweise räumlich getrennt vom nicht-flüchtigen ersten Datenspeicher 2 angeordnet und beispielsweise als Flash-Speicher ausgebildet.

Vorzugsweise werden die zweiten Referenzwegstreckendaten in Verfahrensschritt S7 zusätzlich zu den bereits im weiteren Speicherbereich 4 gespeicherten zweiten Referenzwegstreckendaten, welche die bisherige zweite Referenzwegstrecke gekennzeichnet haben, gespeichert, so dass auch der weitere Speicherbereich 4 eine Historie der zurückgelegten Gesamtwegstrecke enthält.

Die zweiten Referenzwegstreckendaten werden in Verfahrensschritt S7 vorzugsweise in verschlüsselter Form im weiteren Speicherbereich 4 gespeichert. Dazu wird, beispielsweise von der Steuereinrichtung, auf einen kryptographischen Schlüssel zugegriffen, mittels dessen die Verschlüsselung in bevorzugter Weise mit einem symmetrischen Verschlüsselungsverfahren, etwa mit AES-128, bevorzugt mit AES-196, insbesondere mit AES-256, durchführbar ist. Der kryptographische Schlüssel kann dabei, wie im vorliegenden Ausführungsbeispiel gezeigt, in einem, insbesondere separatem, Hardware-Sicherheitsmodul 9 abgelegt sein, auf das die Steuereinrichtung zugreifen kann.

Falls sich die Gesamtwegstrecke gemäß dem Ergebnis des zweiten Vergleichs in Verfahrensschritt S6 dagegen nicht gemäß dem zweiten Kriterium gegenüber der zweiten Referenzgesamtwegstrecke erhöht hat, wird in einem weiteren Verfahrensschritt S8 geprüft, ob der gegenwärtige Kraftstoffgesamtverbrauch des Fahrzeugs mindestens um einen weiteren vorgegebenen Wert größer ist als ein Kraftstoffgesamtverbrauch zum dritten früheren Zeitpunkt

Der Kraftstoffgesamtverbrauch des Fahrzeugs zum dritten früheren Zeitpunkt ist vorzugsweise im weiteren Speicherbereich 4 des nicht-flüchtigen zweiten Datenspeichers 5 in Form von weiteren Verbrauchsdaten zusätzlich zu den zweiten Referenzwegstreckendaten gespeichert, und kann für die Prüfung in Verfahrensschritt S8 ausgelesen werden.

Ergibt die Prüfung, dass der gegenwärtige Kraftstoffgesamtverbrauch mindestens um den weiteren vorgegebenen Wert, etwa um 10 Liter, größer ist, wird das Verfahren 100 in Verfahrensschritt S7 fortgeführt. Dabei wird neben den zweiten Referenzwegstreckendaten vorzugsweise auch der gegenwärtige Kraftstoffgesamtverbrauch des Fahrzeugs in Form von weiteren Verbrauchsdaten im dritten Speicherbereich 4 gespeichert, um für zukünftige Prüfungen zur Verfügung zu stehen.

Ergibt die in Verfahrensschritt S8 durchgeführte Prüfung jedoch, dass der gegenwärtige Kraftstoffverbrauch nicht mindestens um den weiteren vorgegebenen Wert größer ist als der Kraftstoffgesamtverbrauch zum dritten früheren Zeitpunkt, wird das Verfahren 100 mit einem weiteren Verfahrensschritt S9 fortgeführt.

Vorzugsweise wird das Verfahren 100 zyklisch mit einem vorgegebenen Verfahrenstakt ausgeführt, wobei der Verfahrensschritt S1 einen Taktzyklus beginnt und der Verfahrensschritt S9, gegebenenfalls nach Aktualisierung der Referenzwegstreckendaten in Verfahrensschritten S4 und/oder S7, diesen Taktzyklus beendet. Insbesondere beginnt nach Verfahrensschritt S9 ein neuer Taktzyklus mit dem Verfahrensschritt S1.

Der vorgegebene Verfahrenstakt kann ein zeitlicher Takt sein, wobei die Verfahrensschritte S1 bis S9 in vorgegebenen zeitlichen Intervallen, etwa jede Sekunde, vorzugsweise alle 10 Sekunden, insbesondere alle 60 Sekunden, ausgeführt werden. Vorzugsweise ist der vorgegebene Verfahrenstakt jedoch ein räumlicher Takt, wobei die Verfahrensschritte S1 bis S9 in vorgegebenen räumlichen Intervallen, etwa mindestens alle 5 km, vorzugsweise mindestens alle 2 km, insbesondere mindestens jeden Kilometer, ausgeführt werden. Das räumliche Intervall des Verfahrenstaktes entspricht in diesem Fall dem Inkrement, um das die im ersten Speicherbereich 1 in Form der Wegstreckendaten abgelegte Gesamtwegstrecke erhöht wird.

Mit anderen Worten werden die Wegstreckendaten, welche die ermittelte gegenwärtig zurückgelegte Gesamtwegstrecke kennzeichnen, vorzugsweise im vorgegebenen Verfahrenstakt im ersten Speicherbereich 1 gespeichert. Der Speicherbereich 1 kann daher in bevorzugter Weise als primärer Wegstreckenzähler dienen, und eine Anzeige der zurückgelegten Gesamtwegstrecke, etwa in einem Kombiinstrument des Fahrzeugs, basiert vorzugsweise auf den im ersten Speicherbereich 1 gespeicherten Wegstreckendaten.

Da die ersten bzw. zweiten Referenzwegstreckendaten dagegen in Abhängigkeit der Prüfung hinsichtlich des Kraftstoffgesamtverbrauchs und/oder des Ergebnisses des Vergleichs der gegenwärtig zurückgelegten Gesamtwegstrecke mit der ersten bzw. zweiten Referenzgesamtwegstrecke gespeichert werden, ergibt sich für die Speicherung der ersten Referenzwegstreckendaten in Verfahrensschritt S4 sowie für die Speicherung der zweiten Referenzwegstreckendaten in Verfahrensschritt S7 jeweils ein Speichertakt, der sich vom vorgegebenen Verfahrenstakt unterscheidet. Insbesondere werden die ersten und/oder zweiten Referenzwegstreckendaten seltener im zweiten bzw. weiteren Speicherbereich 3, 4 gespeichert als die Wegstreckendaten im ersten Speicherbereich 1.

Daher ist der erste Speicherbereich 1 vorzugsweise eingerichtet, nur diejenigen Wegstreckendaten zu speichern, welche die gegenwärtig zurückgelegte Gesamtwegstrecke kennzeichnen, während im zweiten und weiteren Speicherbereich 3, 4 jeweils mehrere erste bzw. zweite Referenzwegstreckendaten speicherbar sind, so dass jeweils eine Historie der zurückgelegten Gesamtwegstrecke gebildet werden kann. Zu diesem Zweck sind der zweite und weitere Speicherbereich 3, 4 vorzugsweise auch eingerichtet, eine größere Datenmenge zu speichern als der erste Speicherbereich 1.

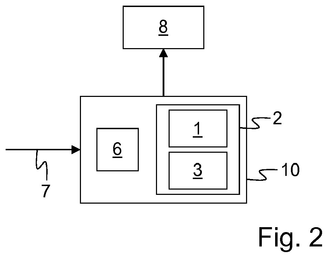

**Fig. 2** zeigt ein Ausführungsbeispiel einer erfindungsgemäßen Vorrichtung 10 zum Speichern von Wegstreckendaten, die eine zurückgelegte Gesamtwegstrecke eines Fahrzeugs, insbesondere Kraftfahrzeugs, kennzeichnen. Die Vorrichtung 10 weist eine Steuereinrichtung 6 und einen nicht-flüchtigen ersten Datenspeicher 2 auf. Der nicht-flüchtige erste Datenspeicher 2 weist einen ersten Speicherbereich 1 und einen zweiten Speicherbereich 3 auf.

Die Vorrichtung 10 ist mit einem oder mehreren Steuergeräten des Fahrzeugs über einen Fahrzeugbus 7, insbesondere einen CAN-Bus, verbunden, so dass über den Fahrzeugbus 7 gesendete Busnachrichten von der Vorrichtung 10 empfangen und insbesondere von der Steuereinrichtung 6 verarbeitet werden können. Die Steuereinrichtung 6 ist vorzugsweise eingerichtet, eine gegenwärtige zurückgelegte Gesamtwegstrecke des Fahrzeugs aus einer Busnachricht auszulesen, insbesondere aus den darin enthaltenen Fahrzeugdaten abzuleiten.

Basierend auf der ermittelten gegenwärtig zurückgelegten Gesamtwegstrecke werden von der Steuereinrichtung 6 Wegstreckendaten, welche die Gesamtwegstrecke kennzeichnen, im ersten Speicherbereich 1 des nicht-flüchtigen ersten Datenspeichers 2 gespeichert, etwa indem bereits im ersten Speicherbereich 1 abgelegte ältere Wegstreckendaten, die eine zu einem ersten früheren Zeitpunkt zurückgelegte Gesamtwegstrecke kennzeichnen, überschrieben oder derart geändert werden, dass sie nach der Änderung die gegenwärtig zurückgelegte Gesamtwegstrecke kennzeichnen.

Die Vorrichtung 10 ist vorzugsweise mit einer Anzeigeeinrichtung 8 verbunden, die zur Anzeige der gegenwärtig zurückgelegten Gesamtwegstrecke eingerichtet ist. Die entsprechenden Wegstreckendaten können etwa von der Steuereinrichtung 6 aus dem ersten Speicherbereich 1, der vorzugsweise als primärer Wegstreckenspeicher dient, ausgelesen und an der Anzeigeeinrichtung 8 bereitgestellt werden.

Die Steuereinrichtung 6 ist zudem eingerichtet, einen Vergleich der gegenwärtig zurückgelegten Gesamtwegstrecke, wie sie durch die im ersten Speicherbereich 1 gespeicherten Wegstreckendaten gekennzeichnet ist, mit einer ersten Referenzgesamtwegstrecke, die durch im zweiten Speicherbereich 3 gespeicherte erste Referenzwegstreckendaten gekennzeichnet ist, zu vergleichen und - je nach Ergebnis des Vergleichs - die Wegstreckendaten aus dem ersten Speicherbereich 1 als aktualisierte, insbesondere zusätzliche, erste Referenzwegstreckendaten im zweiten Speicherbereich 3 zu speichern. Dabei werden die Wegstreckendaten aus dem ersten Speicherbereich 1 insbesondere dann als erste Referenzwegstreckendaten im zweiten Speicherbereich 3 gespeichert, wenn die durch die Wegstreckendaten gekennzeichnete Gesamtwegstrecke um einen vorgegebenen Wert, etwa 100 km, größer ist als die durch die ersten Referenzwegstreckendaten gekennzeichnete erste Referenzgesamtwegstrecke.

Dadurch wird die Gesamtwegstrecke im zweiten Speicherbereich 3 weniger häufig gespeichert als im ersten Speicherbereich 1. Vorzugsweise weist der erste Speicherbereich 1 deshalb kurze Zugriffs- bzw. Schreibzeiten und insbesondere nur Speicherplatz für eine einzige in Form von Wegstreckendaten gespeicherte Gesamtwegstrecke auf, während der zweite Speicherbereich 3 vorzugsweise einen größeren Speicherplatz für mehrere in Form von ersten Referenzwegstreckendaten gespeicherte erste Referenzgesamtwegstrecken aufweist, so dass der zweite Speicherbereich 3 eine Historie der zurückgelegten Gesamtwegstrecke enthalten kann.

Dabei ist der erste Speicherbereich 1 insbesondere eingerichtet, nur solche Gesamtwegstrecken in Form von Wegstreckendaten zu speichern, die größer sind als eine zum früheren ersten Zeitpunkt zurückgelegte Gesamtwegstrecke, die durch die bereits im ersten Speicherbereich 1 gespeicherten älteren Wegstreckendaten gekennzeichnet ist. Der erste Speicherbereich 1 kann insbesondere eingerichtet sein, ein von der Steuereinrichtung 6, insbesondere in einem vorgegebenen Verfahrenstakt, ausgegebenes Speichersignal aufzunehmen und daraufhin die in ihm gespeicherten Wegstreckendaten so zu ändern oder zu ersetzen, dass die durch sie gekennzeichnete Gesamtwegstrecke hochgezählt wird. Durch diese "Aktivierung" des ersten Speicherbereichs 1 mittels des Speichersignals wird die im ersten Speicherbereich 1 in Form von Wegstreckendaten gespeicherte Gesamtwegstrecke inkrementell erhöht. Daher sind die im ersten Speicherbereich 1 gespeicherten Wegstreckendaten gesichert, d.h. gegen eine Manipulation durch Zurücksetzen der Gesamtwegstrecke, geschützt.

Um den Schutz der in Form von Wegstreckendaten gespeicherten Gesamtwegstrecke weiter zu erhöhen, werden die ersten Referenzwegstreckendaten vorzugsweise verschlüsselt im zweiten Speicherbereich 3 gespeichert. Mittels des von der Steuereinrichtung 6 ausgeführten Vergleichs kann die im ersten Speicherbereich 1 in Form von Wegstreckendaten gespeicherte Gesamtwegstrecke auf Plausibilität geprüft und gegebenenfalls wiederhergestellt werden, indem die aktuellen ersten Referenzwegstreckendaten aus dem zweiten Speicherbereich 3 in den ersten Speicherbereich 1 geschrieben werden.

Die Kombination des gesicherten Speicherns der Wegstreckendaten im ersten Speicherbereich 1 mit dem verschlüsselten Speichern der ersten Referenzwegstreckendaten im zweiten Speicherbereich 3 ermöglicht daher einen besonders zuverlässigen Schutz der in Form von Wegstreckendaten gespeicherten Gesamtwegstrecke.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### Bezuqszeichenliste

- 1: erster Speicherbereich
- 2: erster nicht-flüchtiger Datenspeicher
- 3: zweiter Speicherbereich
- 4: weiterer Speicherbereich
- 5: zweiter nicht-flüchtiger Datenspeicher
- 6: Steuereinrichtung
- 7: Fahrzeugbus
- 8: Anzeigeeinrichtung
- 9: Hardware-Sicherheitsmodul
- 10: Vorrichtung
- 100: Verfahren
- S1 - S9: Verfahrensschritte

## Patentansprüche

1. Verfahren (100) zum Speichern von Wegstreckendaten, die eine zurückgelegte Gesamtwegstrecke eines Fahrzeugs, insbesondere Kraftfahrzeugs, kennzeichnen, in einer Speichereinrichtung, **dadurch gekennzeichnet dass** das Verfahren die folgende Schritte aufweist:
(S2) Speichern von Wegstreckendaten, welche eine auf Grundlage von vom Fahrzeug ermittelten Fahrzeugdaten ermittelte zurückgelegte Gesamtwegstrecke des Fahrzeugs kennzeichnen, in einem nichtflüchtigen ersten Speicherbereich (1) der Speichereinrichtung, wenn dadurch eine Erhöhung der in ihm mittels entsprechender Wegstreckendaten bereits zuvor gespeicherten Gesamtwegstrecke verbunden ist, wobei der erste Speicherbereich (1) eingerichtet ist, keine Änderung der in ihm bereits gespeicherten Wegstreckendaten zuzulassen, soweit diese Änderung zu einer Verringerung der entsprechenden Gesamtwegstrecke korrespondiert;
(S3) Vergleichen einer ersten Referenzgesamtwegstrecke, die mittels entsprechender erster Referenzwegstreckendaten in einem vom ersten Speicherbereich (1) verschiedenen zweiten Speicherbereich (3) der Speichereinrichtung gespeichert ist, mit der gegenwärtig im ersten Speicherbereich (1) mittels der Wegstreckendaten gespeicherten Gesamtwegstrecke im Rahmen eines ersten Vergleichs; und
(S4) falls gemäß dem Ergebnis des ersten Vergleichs sich die Gesamtwegstrecke gegenüber der ersten Referenzgesamtwegstrecke gemäß einem vorbestimmten ersten Kriterium erhöht hat, verschlüsseltes Speichern von aktualisierten ersten Referenzwegstreckendaten, die der Gesamtwegstrecke entsprechen, im zweiten Speicherbereich (3).

2. Verfahren (100) nach Anspruch 1, wobei, falls gemäß dem Ergebnis des ersten Vergleichs sich die Gesamtwegstrecke gegenüber der ersten Referenzgesamtwegstrecke gemäß einem vorbestimmten Kriterium verringert hat, die im ersten Speicherbereich (1) gespeicherten Wegstreckendaten so aktualisiert werden, dass sie nun zur ersten Referenzgesamtwegstrecke korrespondieren.

3. Verfahren (100) nach Anspruch 2, wobei, falls gemäß dem Ergebnis des ersten Vergleichs sich die Gesamtwegstrecke gegenüber der ersten Referenzgesamtwegstrecke gemäß dem vorbestimmten Kriterium verringert hat, zusätzlich zur Aktualisierung der Wegstreckendaten im ersten Speicherbereich (1) eine Indikatorinformation über das Auftreten des Vergleichsergebnisses gespeichert oder an einer Schnittstelle ausgegeben wird.

4. Verfahren (100) nach einem der vorangehenden Ansprüche, wobei die im ersten Speicherbereich (1) gespeicherten Wegstreckendaten im zweiten Speicherbereich (3) als erste Referenzwegstreckendaten gespeichert werden, falls beim ersten Vergleich festgestellt wird, dass der zweite Speicherbereich (3) keine ersten Referenzwegstreckendaten enthält.

5. Verfahren (100) nach einem der vorangehenden Ansprüche, des Weiteren aufweisend:
(S6) Vergleichen der mittels der Wegstreckendaten im ersten Speicherbereich (1) gespeicherte Gesamtwegstrecke mit einer zweiten Referenzgesamtwegstrecke, die mittels zweiter Referenzwegstreckendaten in einem weiteren Speicherbereich (4) gespeichert ist, im Rahmen eines zweiten Vergleichs; und
(S7) falls gemäß dem Ergebnis des zweiten Vergleichs sich die Gesamtwegstrecke gegen über der zweiten Referenzgesamtwegstrecke gemäß einem vorbestimmten zweiten Kriterium erhöht hat, verschlüsseltes Speichern von aktualisierten zweiten Referenzwegstreckendaten, die der Gesamtwegstrecke entsprechen, im weiteren Speicherbereich (4).

6. Verfahren (100) nach einem der vorangehenden Ansprüche, wobei das erste Kriterium und/oder das zweite Kriterium so definiert ist, dass es erfüllt wird, wenn die Gesamtwegstrecke, wie sie durch die im ersten Speicherbereich (1) gespeicherten Wegstreckendaten gekennzeichnet ist, um mehr als 10 km, vorzugsweise um mehr als 100 km, insbesondere um mehr als 1000 km größer ist als die erste Referenzwegstrecke bzw. die zweite Referenzwegstrecke.

7. Verfahren (100) nach einem der vorangehenden Ansprüche, wobei beim Vergleichen im Rahmen des ersten Vergleichs und/oder des zweiten Vergleichs ein aus den Fahrzeugdaten abgeleiteter gegenwärtiger Kraftstoffgesamtverbrauch des Fahrzeugs berücksichtigt wird.

8. Verfahren (100) nach Anspruch 7, wobei die ersten Referenzwegstreckendaten im zweiten Speicherbereich (3) und/oder gegebenenfalls die zweiten Referenzwegstreckendaten im weiteren Speicherbereich (4) gespeichert werden, wenn der gegenwärtige Kraftstoffgesamtverbrauch des Fahrzeugs um mehr als 100 Liter, vorzugsweise mehr als 10 Liter, insbesondere mehr als 1 Liter, gegenüber einem Kraftstoffgesamtverbrauch des Fahrzeugs zu einem früheren Zeitpunkt gestiegen ist.

9. Verfahren (100) nach einem der vorangehenden Ansprüche, wobei die ersten Referenzwegstreckendaten im zweiten Speicherbereich (3) und/oder gegebenenfalls die zweiten Referenzwegstreckendaten im weiteren Speicherbereich (4) durch Zugriff auf zumindest einen kryptographischen Schlüssel, der in einem Schlüsselspeicher (9) abgelegt ist, ver- und/oder entschlüsselt werden.

10. Verfahren (100) nach einem der vorangehenden Ansprüche, wobei im zweiten Speicherbereich (3) und/oder im weiteren Speicherbereich (4) eine Historie der zurückgelegten Gesamtwegstrecke erzeugt wird, indem erste Referenzwegstreckendaten bzw. zweite Referenzwegstreckendaten neben bereits im zweiten bzw. weiteren Speicherbereich (3, 4) gespeicherten Referenzwegstreckendaten gespeichert werden.

11. Verfahren (100) nach einem der vorangehenden Ansprüche, wobei die Wegstreckendaten in der Weise im ersten Speicherbereich (1) gespeichert werden, dass sich die durch sie gekennzeichnete gegenwärtig zurückgelegte Gesamtwegstrecke gegenüber der zu einem früheren Zeitpunkt zurückgelegten Gesamtwegstrecke um einen vorgegebenen Wert inkrementell erhöht.

12. Vorrichtung (10) zum Speichern von Wegstreckendaten, die konfiguriert ist, das Verfahren (100) nach einem der vorangehenden Ansprüche auszuführen.

13. Vorrichtung (10) nach Anspruch 12, wobei die Vorrichtung (10) eine Speichereinrichtung mit zumindest zwei nicht-flüchtigen Datenspeichern (2, 5) aufweist, die räumlich voneinander getrennt sind, wobei jeder der nichtflüchtigen Datenspeicher (2, 5) mindestens einen der Speicherbereiche (1, 3, 4) bereitstellt.

14. Vorrichtung (10) nach einem der Ansprüche 12 oder 13, wobei zumindest einer der nicht-flüchtigen Datenspeicher (2, 5) als eines der folgenden ausgebildet ist:
- EEPROM,
- Flash-Speicher, oder
- fahrzeugexterne Referenzdatenbank.

15. Fahrzeug, insbesondere Kraftfahrzeug, mit einer Vorrichtung (10) nach einem der Ansprüche 12 bis 14.

## Claims

1. A method (100) of storing, in a memory device, travel distance data which characterizes a total distance travelled by a vehicle, in particular a motor vehicle, wherein the method comprises:
(S2) storing travel distance data in a non-volatile first memory area (1) of the memory device, which travel distance data characterizes a total distance travelled by the vehicle, determined on the basis of vehicle data determined by the vehicle, if this results in an increase in the total travel distance already previously stored therein by means of corresponding travel distance data, wherein the first memory area (1) is set up so as not to permit any change in the travel distance data that is already stored therein, insofar as this change corresponds to a reduction in the corresponding total travel distance;
(S3) comparing, within the framework of a first comparison, a first reference total travel distance, which is stored in a second memory area (3) of the memory device by means of corresponding first reference travel distance data, which second memory area (3) is different from the first memory area (1), with the total travel distance which is currently stored in the first memory area (1) by means of the travel distance data; and
(S4) if, according to the result of the first comparison, the total travel distance has increased compared with the first reference total travel distance according to a predetermined first criterion, storing updated first reference travel distance data corresponding to the total travel distance in the second memory area (3) in an encrypted form.

2. The method (100) according to claim 1, wherein, in case the total distance travelled has decreased when compared with the first reference total travel distance according to the result of the first comparison and according to a predetermined criterion, the travel distance data stored in the first memory area (1) is updated in such a way that it now corresponds to the first reference total travel distance.

3. The method (100) according to claim 2, wherein, in addition to updating the travel distance data in the first memory area (1), indicator information regarding the occurrence of the comparison result is stored or output at an interface in case the total travel distance has decreased when compared with the first reference total travel distance according to the result of the first comparison and according to the predetermined criterion.

4. The method (100) according to any one of the preceding claims, wherein the travel distance data which is stored in the first memory area (1) is stored in the second memory area (3) as first reference travel distance data if, in the course of the first comparison, it is determined that the second memory area (3) does not contain any first reference travel distance data.

5. The method (100) according to any one of the preceding claims, wherein the method further comprises:
(S6) comparing, within the framework of a second comparison, the total distance travelled, which is stored by means of the travel distance data in the first memory area (1), with a second reference total travel distance, which is stored by means of second reference travel distance data in a further memory area (4); and
(S7) if, according to the result of the second comparison, the total travel distance has increased with respect to the second reference total travel distance in accordance with a predetermined second criterion, storing updated second reference travel distance data in the further memory area (4) in an encrypted form, which updated second reference travel distance data corresponds to the total travel distance.

6. The method (100) according to any one of the preceding claims, wherein the first criterion and / or the second criterion is defined in such a way that it is met if the total distance travelled, as **characterized by** the travel distance data stored in the first memory area (1), is greater than the first reference travel distance or, respectively, the second reference travel distance by more than 10 km, preferably by more than 100 km, in particular by more than 1000 km.

7. The method (100) according to any one of the preceding claims, wherein a current total fuel consumption of the vehicle which is derived from the vehicle data is taken into account in the course of the comparing within the framework of the first comparison and / or the second comparison.

8. The method (100) according to claim 7, wherein the first reference travel distance data is stored in the second memory area (3) and / or, if applicable, the second reference travel distance data is stored in the further memory area (4) if the current total fuel consumption of the vehicle has increased by more than 100 litres, preferably by more than 10 litres, in particular by more than 1 litre, when compared with a total fuel consumption of the vehicle at an earlier point in time.

9. The method (100) according to any one of the preceding claims, wherein the first reference travel distance data in the second memory area (3) and / or, if applicable, the second reference travel distance data in the further memory area (4) is encrypted and / or decrypted by accessing at least one cryptographic key which is stored in a key storage (9).

10. The method (100) according to any one of the preceding claims, wherein a history of the total distance travelled is generated in the second memory area (3) and / or in the further memory area (4) by first reference travel distance data or second reference travel distance data respectively being stored in addition to reference travel distance data already stored in the second or the further memory area (3, 4).

11. The method (100) according to any one of the preceding claims, wherein the travel distance data is stored in the first memory area (1) in such a way that the current total distance travelled which is **characterized by** the travel distance data is increased incrementally by a predetermined value when compared with the total distance travelled at an earlier point in time.

12. A device (10) for storing travel distance data configured to carry out the method (100) according to any one of the preceding claims.

13. The device (10) according to claim 12, wherein the device (10) comprises a memory device which has at least two non-volatile data memories (2, 5) which are spatially separated from each other, wherein each of the non-volatile data memories (2, 5) provides at least one of the memory areas (1, 3, 4).

14. The device (10) according to any one of the claims 12 or 13, wherein at least one of the non-volatile data memories (2, 5) is constructed as one of the following:
- EEPROM,
- flash memory, or
- reference database external to the vehicle.

15. A vehicle, in particular a motor vehicle, comprising a device (10) according to any one of the claims 12 to 14.

## Revendications

1. Procédé (100) pour le stockage de données de trajet qui caractérisent un trajet entier parcouru d'un véhicule, en particulier d'un véhicule automobile, dans un dispositif de stockage, **caractérisé en ce que** le procédé présente les étapes suivantes :
(S2) le stockage de données de parcours qui caractérisent un trajet entier du véhicule parcouru calculé sur la base de données de véhicule calculées par le véhicule, dans une première zone de stockage (1) non volatile du dispositif de stockage lorsqu'ainsi une augmentation du trajet entier déjà stocké précédemment en lui au moyen de données de trajet correspondantes est liée, dans lequel la première zone de stockage (1) est conçue afin de n'autoriser aucune modification des données de trajet déjà stockées en lui dans la mesure où cette modification correspond à une diminution du trajet entier correspondant ;
(S3) la comparaison d'un premier trajet entier de référence qui est stocké au moyen de premières données de trajet de référence correspondantes dans une seconde zone de stockage (3) différente de la première zone de stockage (1) du dispositif de stockage, avec le trajet entier stocké actuellement dans la première zone de stockage (1) au moyen des données de trajet dans le cadre d'une première comparaison ; et
(S4) dans le cas où selon le résultat de la première comparaison le trajet entier a augmenté par rapport au premier trajet entier de référence selon un premier critère prédéterminé, le stockage crypté de premières données de trajet de référence actualisées qui correspondent au trajet entier, dans la seconde zone de stockage (3).

2. Procédé (100) selon la revendication 1, dans lequel, au cas où selon le résultat de la première comparaison le trajet entier a diminué par rapport au premier trajet entier de référence selon un critère prédéterminé, les données de trajet stockées dans la première zone de stockage (1) sont actualisées de sorte qu'elles correspondent maintenant au premier trajet entier de référence.

3. Procédé (100) selon la revendication 2, dans lequel, au cas où selon le résultat de la première comparaison le trajet entier a diminué par rapport au premier trajet entier de référence selon le critère prédéterminé, une information d'indicateur sur l'apparition du résultat de comparaison est stockée ou est délivrée au niveau d'une interface outre l'actualisation des données de trajet dans la première zone de stockage (1).

4. Procédé (100) selon l'une quelconque des revendications précédentes, dans lequel les données de trajet stockées dans la première zone de stockage (1) sont stockées dans la seconde zone de stockage (3) comme premières données de trajet de référence au cas où il est constaté lors de la première comparaison que la seconde zone de stockage (3) ne contient aucune première donnée de trajet de référence.

5. Procédé (100) selon l'une quelconque des revendications précédentes, présentant en outre :
(S6) la comparaison du trajet entier stocké au moyen des données de trajet dans la première zone de stockage (1) avec un second trajet entier de référence qui est stocké au moyen de secondes données de trajet de référence dans une autre zone de stockage (4), dans le cadre d'une seconde comparaison ; et
(S7) au cas où selon le résultat de la seconde comparaison le trajet entier a augmenté par rapport au second trajet entier de référence selon un second critère prédéterminé, le stockage crypté de secondes données de trajet de référence actualisées qui correspondent au trajet entier, dans l'autre zone de stockage (4).

6. Procédé (100) selon l'une quelconque des revendications précédentes, dans lequel le premier critère et/ou le second critère est défini de sorte qu'il soit rempli lorsque le trajet entier, comme il est **caractérisé par** les données de trajet stockées dans la première zone de stockage (1), est supérieur de plus de 10 km, de préférence de plus de 100 km, en particulier de plus de 1 000 km au premier trajet de référence ou au second trajet de référence.

7. Procédé (100) selon l'une quelconque des revendications précédentes, dans lequel lors de la comparaison dans le cadre de la première comparaison et/ou de la seconde comparaison une consommation entière de carburant actuelle dérivée des données de véhicule du véhicule est prise en considération.

8. Procédé (100) selon la revendication 7, dans lequel les premières données de trajet de référence sont stockées dans la seconde zone de stockage (3) et/ou éventuellement les secondes données de trajet de référence sont stockées dans l'autre zone de stockage (4) lorsque la consommation entière de carburant actuelle du véhicule est augmentée de plus de 100 litres, de préférence de plus de 10 litres, en particulier de plus de 1 litre, par rapport à la consommation entière de carburant du véhicule à un moment antérieur.

9. Procédé (100) selon l'une quelconque des revendications précédentes, dans lequel les premières données de trajet de référence dans la seconde zone de stockage (3) et/ou éventuellement les secondes données de trajet de référence dans l'autre zone de stockage (4) sont cryptées et/ou décryptées par accès à au moins une clé cryptographique qui est déposée dans une mémoire de clé (9).

10. Procédé (100) selon l'une quelconque des revendications précédentes, dans lequel un historique du trajet entier parcouru est généré dans la seconde zone de stockage (3) et/ou dans l'autre zone de stockage (4), en ce que des premières données de trajet de référence ou secondes données de trajet de référence sont stockées à côté de données de trajet de référence déjà stockées dans la seconde ou autre zone de stockage (3, 4).

11. Procédé (100) selon l'une quelconque des revendications précédentes, dans lequel les données de trajet sont stockées dans la première zone de stockage (1) de telle manière que le trajet entier parcouru actuellement **caractérisé par** celles-ci augmente par incrément d'une valeur prédéfinie par rapport au trajet entier parcouru à un moment antérieur.

12. Dispositif (10) pour le stockage de données de trajet qui est configuré afin de réaliser le procédé (100) selon l'une quelconque des revendications précédentes.

13. Dispositif (10) selon la revendication 12, dans lequel le dispositif (10) présente un dispositif de stockage avec au moins deux mémoires de données (2, 5) non volatiles qui sont séparées spatialement l'une de l'autre, dans lequel chacune des mémoires de données (2, 5) non volatiles fournit au moins une des zones de stockage (1, 3, 4).

14. Dispositif (10) selon l'une quelconque des revendications 12 ou 13, dans lequel au moins une des mémoires de données (2, 5) non volatiles est formée comme une de ce qui suit :
- EEPROM,
- mémoire flash, ou
- base de données de référence externe au véhicule.

15. Véhicule, en particulier véhicule automobile, avec un dispositif (10) selon l'une quelconque des revendications 12 à 14.
